# EUROPÄISCHE PATENTANMELDUNG

(11) **EP 2 278 236 A2**
(43) Veröffentlichungstag der Anmeldung: **26.01.2011**
(21) Anmeldenummer: 10006113.4
(22) Anmeldetag: 12.06.2010
(51) Int. Cl.: F24J 2/52

(54) **Doppelniveauklammer für Photovoltaikmodule**

(30) Priorität: 18.06.2009 DE 102009025365
(71) Anmelder: Adensis GmbH, 01129 Dresden (DE)
(72) Erfinder: Beck, Bernhard, 97332 Volkach OT Dimbach (DE)

(57) **Zusammenfassung**

Es wird eine Klammer (1) zur Befestigung von rechteckigen Photovoltaikmodulen (15, 21) auf einer Modulschiene (9) vorgestellt. Die Klammer (1) ist so gestaltet, dass die Oberkante eines ersten Moduls (15) auf einem höheren Niveau montierbar ist als die Unterkante eines zweiten Moduls (21). Dazu liegen die Oberkante und die Unterkante jeweils auf eine gleich geneigte erste beziehungsweise zweite Auflagefläche (13,19) eines Basisteils (3) auf und sind dort mittels eines Bügels (5) fixiert. Die Klammer (1) vermeidet sich bildende Hohlräume, durch die Schmelzwasser eindringen aber nicht wieder ablaufen kann.

## Beschreibung

Die Erfindung bezieht sich auf eine Klammer zur geneigten Befestigung von rechteckigen Photovoltaikmodulen auf einer Modulschiene, wobei die Oberkante eines ersten Moduls auf einem höheren Niveau montierbar ist als die Unterkante eines zweiten Moduls.

Solche Klammern werden eingesetzt, um bei horizontal verlaufenden Modulschienen auf Flachdächern oder Dächer und Tragerüsten mit geringer Neigung die Photovoltaikmodule zu befestigen und gleichzeitig den Einfallswinkel der Sonnenstrahlen auf die Photovoltaikmodule zu verbessern. Aus der EP-A-0 531 869 ist eine Klammer bekannt, bei der die Oberkante des ersten Moduls in eine erste schlitzartige Ausnehmung in der Klammer eingesteckt wird. Unterhalb der ersten Ausnehmung befindet sich eine mit ihrer Schlitzöffnung entgegengesetzt orientierte zweite Ausnehmung, in welche die Unterkante des zweiten PV-Moduls eingeschoben werden kann. Bei dieser Klammerausführung ist es von der Anmelderin als nachteilig erkannt worden, dass im Winter geschmolzenes Schneewasser zwischen den Modulen und den Ausnehmungen geraten kann, und dort wieder gefriert. Dieses kann zu einem mechanischen Schaden der Klammer oder des Moduls führen. Außerdem wird bei niedrigem Sonnenstand keine optimale Ausnutzung der Modulfläche erreicht, da die Oberkante des ersten Moduls den unteren Bereich des zweiten Photovoltaikmoduls abschattet oder die Module mit einem unnötig breiten Rand versehen werden müssen.

Vorliegender Erfindung liegt die Aufgabe zugrunde, eine Beschädigung der Klammer und der Module aufgrund von gefrierendem Schmelzwasser zu vermeiden und bei schräg zur Sonne ausgerichteten PV-Modulen bei niedrigen Sonnenständen eine Abschattung des unteren Randes des höher liegenden Moduls durch den oberen Rand des tiefer liegenden Moduls zu verhindern.

Diese Aufgabe wird erfindungsgemäß dadurch gelöst, dass die Oberkante und die Unterkante jeweils auf eine erste beziehungsweise zweite Auflage eines Basisteils, welches eine Unterseite hat, auflegbar und dort mittels eines Bügels fixierbar ist, wobei die erste und die zweite Auflage jeweils durch eine Auflagefläche, eine Auflagelinie oder einen Auflagepunkt gebildet werden und wobei die erste und die zweite Ablagefläche, die erste und die zweite Auflagelinie oder der erste und der zweite Auflagepunkt, projiziert auf die Unterseite, voneinander beabstandet sind, so dass der höher liegende Rand der ersten Auflagefläche, die Auflagelinie oder der Auflagepunkt einen vorgegebenen Abstand zum unten liegenden Rand der zweiten Auflagefläche aufweist, wodurch eine klammerbedingte Schrägstellung des Photovoltaikmoduls bereitgestellt wird.

Etwas anders ohne die funktionalen Zusätze formuliert, besteht die Klammer also aus einem Basisteil, welches eine vorzugsweise ebene Unterseite aufweist, an deren gegenüberliegender Oberseite auf unterschiedlichem Höhenniveau zwei Auflagen ausgebildet sind und aus einem Bügel, dessen Enden in Richtung zu den Auflagen hin vorspannbar sind. Die zusätzlich zur vorliegenden Dachneigung durch die Doppelniveauklammern bereitgestellte Schräge oder Neigung verbessert den Einfallswinkel bei nicht optimaler Dachneigung. Ist die Dachneigung zu groß, kann die Doppelniveauklammer auch anders herum verbaut werden, um die resultierende Neigung der Photovoltaikmodule in Richtung des optimalen Winkels zu vermindern. Auch hier sorgt der Abstand A für eine Optimierung, eben nicht bei niedrigen Sonnenständen, sondern dann bei höheren Sonnenständen, wo bei zu steilen Dächern die Abschattung vom höher liegenden Modul auf den oberen Rand des tiefer liegenden Moduls erfolgt. Der Betrag der Klammer-bedingten Schrägstellung hängt dabei von der Höhe des Niveauunterschiedes der Ablagen und von der Breite der PV-Module ab, vorausgesetzt, die Module werden mit ihrer Breitseite in Nord-Süd Richtung montiert.

Die Klammer wird mittels eines Befestigungsmittels in regelmäßigen Abständen entlang der Modulschiene kraftschlüssig befestigt, so dass weder Wind- noch Schneelasten auf den Photovoltaikmodulen zu einer Verschiebung führen können. Dann werden die Photovoltaikmodule auf die Auflageflächen gelegt und mittels des Bügels gegen die Auflageflächen gedrückt. Damit sind die PV-Module so fixiert, dass sie in geringen Grenzen bewegbar sind, um Temperaturschwankungen, Biegungen und dergleichen auszugleichen. Durch die Gestaltung der Klammer mit nach oben offenen Auflagen, insbesondere jeweils gleich geneigte, ebene Auflageflächen oder Auflagen mit einer oberen kugelförmigen Fläche, die jeweils einen Auflagepunkt bereitstellen, oder Auflagen mit jeweils einer oberen zylinderartig geformten Fläche, die eine Auflagelinie bereitstellen, werden keine Hohlräume gebildet, in die Schmelzwasser eintreten, aber nicht austreten und in den Hohlräumen gefrieren kann, was zu der eingangs erwähnten Beschädigung der Klammer führen kann. Wenn zuvor oder im Folgenden von der Aufnahme oder der Aufnahmefläche die Rede ist, ist darunter immer auch die zylindrische oder kugelförmige Gestaltung gemeint, die die Auflagelinie bzw. den Auflagepunkt bereitstellt.

Zur leichteren Montage der Photovoltaikmodule ist es vorgesehen, dass die zweite Auflagefläche, -linie oder -punkt für die untere Modulkante des zweiten Photovoltaikmoduls mit einem als Anschlag dienenden Absatz versehen ist. Dann wird bei der Montage das Modul lediglich zum Anliegen an den Anschlag verschoben und die Klammer wird in Position gebracht. Es ist zweckmäßig, das Basisteil und den Bügel derart vorzumontieren, das lediglich ein einfaches Verschwenken des Bügels über den Modulrand erforderlich ist, um die gewünschte Position zu erreichen. Die Höhe des Absatzes sollte dabei geringer sein als die Höhe des zu montierenden Photovoltaikmoduls, um nicht wieder unerwünschte Hohlräume zu bilden. In der Praxis würde das einer Höhe zwischen 3 und 10 mm entsprechen.

Bei einer Klammer mit Auflageflächen sind diese so gestaltet, dass die erste und die zweite Ablagefläche jeweils parallel zur PV-Modulkante verlaufende Ränder aufweisen. Die Klammer ist vorzugsweise länglich, so dass sie eine Längsachse aufweist, die im montierten Zustand in Richtung der Modulschiene weist. Die zuvor genannten Ränder der Auflageflächen verlaufen dann quer zur Längsrichtung. Dabei hat die Klammer eine Breite, die vorzugsweise mindestens der Breite der Modulschiene entspricht, insbesondere, wenn diese durch ein Flachband realisiert ist.

Erfindungsgemäß ist es vorgesehen, dass die erste und die zweite Ab- oder Auflagefläche, -punkt oder-linie projiziert auf ihre Unterseite (und damit im montierten Zustand auch auf die Modulschiene), voneinander beabstandet sind, so dass der höher liegende Rand der ersten Ab- oder Auflagefläche (-punkt, -linie) einen vorgegebenen Abstand zum unten liegenden Rand der zweiten Ab- oder Auflagefläche (-punkt, -linie) aufweist. Diese Maßnahme bringt im Vergleich zum der Anmelderin bekannten Stand der Technik den zusätzlichen Vorteil mit sich, dass auch bei niedrigem Sonnenstand , z.B. im Winter, keine Verschattung des unteren Randes des zweiten Photovoltaikmoduls durch den oberen Rand des ersten PV-Moduls erfolgt. Solche Abschattungen beeinträchtigen die Effizienz des gesamten Moduls erheblich, da die einzelnen Photovoltaikzellen des Moduls in Reihe geschaltet sind und die Zelle mit der schwächsten Einstrahlung den höchsten elektrischen Widerstand generiert.

Durch die im vorhergehenden Absatz angesprochene Beabstandung ergibt sich ein von oben frei zugänglicher Bereich am Basisteil, dessen Zugänglichkeit weder von der ersten noch von der zweiten Auflagefläche behindert wird. In diesem Bereich, dessen Ausdehnung von dem vorgegebenen Abstandes definiert wird, ist im Basisteil ein Loch zur Durchführung einer Schraube, Niete oder dergleichen vorgesehen, mittels der die Klammer auf die Modulschiene befestigt wird. Es ist sinnvoll, den Mittelteil des Bügels ebenfalls mit einer Öffnung zu versehen, die im montierten Zustand der Klammer mit dem Loch fluchtet. Dann reicht eine einzige Schraube aus, um die Klammer an der Modulschiene zu fixieren. In diesem Zusammenhang sei der Vorteil einer Erhebung an der ansonsten ebenen Unterseite des Basisteils erwähnt. Die Erhebung ist ein Nocken, eine Schulter oder jedes andere Teil, welches geeignet ist, in eine Gegenöffnung in der Modulschiene vorzugsweise formschlüssig eingeführt zu werden. Dann ist die Klammer neben der Schraube über einen zweiten Punkt an der Modulschiene fixiert, was einer möglichen Verschiebung oder Verdrehung entgegenwirkt.

An seinen beiden Enden ist der Bügel so ausgeführt, dass eine Federkraft in Richtung der ersten Auflagefläche (-line oder -punkt) bzw. der zweiten Auflagefläche (-linie oder -punkt) hin ausgeübt wird. Im einfachsten Fall wird das durch eine bogenförmige Gestaltung der Enden bei gleichzeitigem Einsatz elastischen Materials, wie beispielsweise eines Federstahls, erreicht. Die Enden können mit einer Gummitülle versehen sein, um den Reibungskoeffizienten zwischen dem Glas des PV-Moduls und dem Bügel zu verringern und um ein Verkratzen der Modulränder zu vermeiden.

Die Photovoltaikmodule können mit reinen, ungerahmten Glasscheiben aufgebaut sein, oder mit einem Rahmen versehen sein. Sollte das Modul mit Rahmen Verwendung finden, sollte Klammer- und Rahmenmaterial gleich sein. Im Falle der Kontaktierung mit Glas ist die Wahl des Klammermaterials unkritisch.

Ein Verfahren zur Herstellung des Basisteils der Klammer sieht vor, dass eine Stranggussstange mit einem dem Querschnitt der Klammer entsprechenden Profil hergestellt wird, welches anschließend in Scheiben geschnitten wird. Damit wird die Klammer kostengünstig herstellbar, was im Vergleich zu anderen bekannten Klammern nicht der Fall ist.

Weitere Vorteile und Ausgestaltungen der Erfindung ergeben sich aus der Beschreibung eines Ausführungsbeispiels anhand der Figuren. Es zeigen:
Fig. 1 eine erfindungsgemäße Klammer mit Auflagefläche im Querschnitt;
Fig. 2 eine erfindungsgemäße Klammer mit Auflagepunkt im Querschnitt;
Fig. 3 eine perspektivische Ansicht einer Klammer mit Auflagelinie; und
Fig. 4 eine erfindungsgemäße Klammer mit anderer Formgebung.

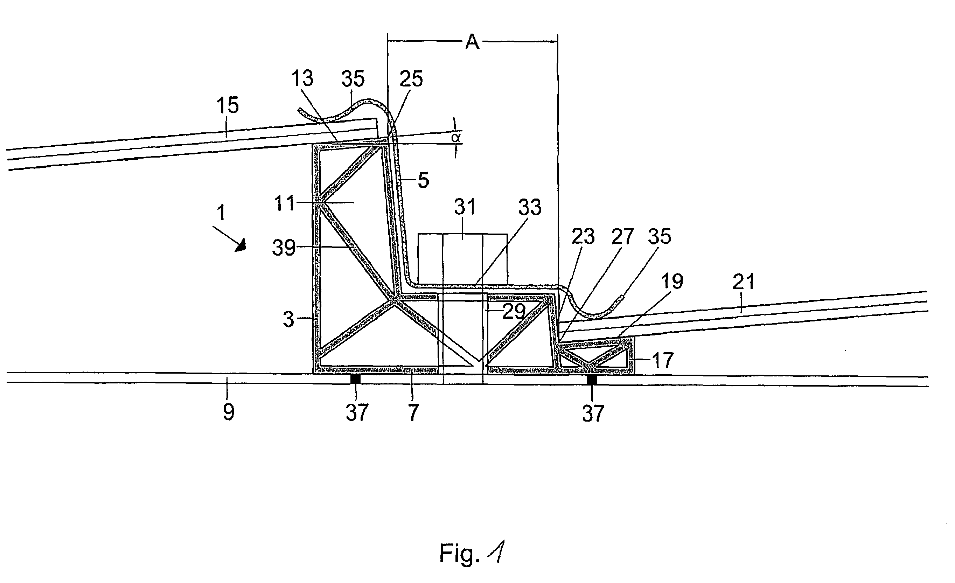

In der Figur 1 ist mit 1 eine Klammer bezeichnet, die aus einem Basisteil 3 und einem Bügel 5 besteht. Das Basisteil 3 weist unten eine ebene Unterseite 7 auf, die geeignet ist auf einem Modulträger, z.B. einer Modulschiene 9 oder einem Modulband (nicht gezeigt) plan aufzuliegen. Auf der rechten Seite der Basisplatte befindet sich eine turmartige Erhebung 11, deren oberes Ende flächig ausgebildet ist und eine erste Auflagefläche 13 für ein erstes Photovoltaikmodul 15 bereitstellt. Die Auflagefläche 13 ist unter einem Winkel α zur Horizontalen geneigt.

Am rechten Rand des Basisteils 3 befindet sich ein Fortsatz 17, dessen untere Fläche einen Teil der Unterseite 7 bildet und der Unterseite 7 gegenüberliegend mit einer zweiten Auflagefläche 19 zur Aufnahme eines zweiten Photovoltaikmoduls 21 versehen ist. Die zweite Auflagefläche ist unter demselben Winkel α zur Horizontalen geneigt. Der Fortsatz 17 ist unter Bildung eines Anschlags 23 an das Basisteil 3 angeformt. Der Anschlag kann dabei die Höhe des zweiten PV-Moduls 21 überragen oder auch geringer sein als die Modulstärke. Wichtig ist, dass keine Hohlräume gebildet werden, in welche Schmelzwasser hineinlaufen, aber nicht wieder ablaufen kann.

Die erste und die zweite Auflagefläche 13, 19 liegen auf unterschiedlichem Niveau, wodurch eine Schrägstellung der Photovoltaikmodule 15, 21 erreicht wird. Diese Schrägstellung vergrößert den Einfallswinkel der Sonnenstrahlung auf die Module 15, 21 und verbessert so die Effizienz der Energieumwandlung von Sonnenenergie in elektrische Energie.

Die erste oder obere Auflagefläche 13 weist eine obere Kante 25 auf, die parallel zum Rand des ersten PV-Moduls 15 verläuft und vorzugsweise von diesem nicht abgedeckt wird. Nach erfolgter Montage der Klammer 1 auf die Modulschiene 9 sollte die obere Kante 25 des Basisteils 3 quer zur Modulschiene 9 verlaufen.

Die zweite oder untere Auflagefläche 19 weist eine untere Kante 27 auf, die parallel zum unteren Rand des zweiten PV-Moduls 21 verläuft. Auch diese untere Kante 27 verläuft nach erfolgter Montage der Klammer 1 quer zur Modulschiene 9.

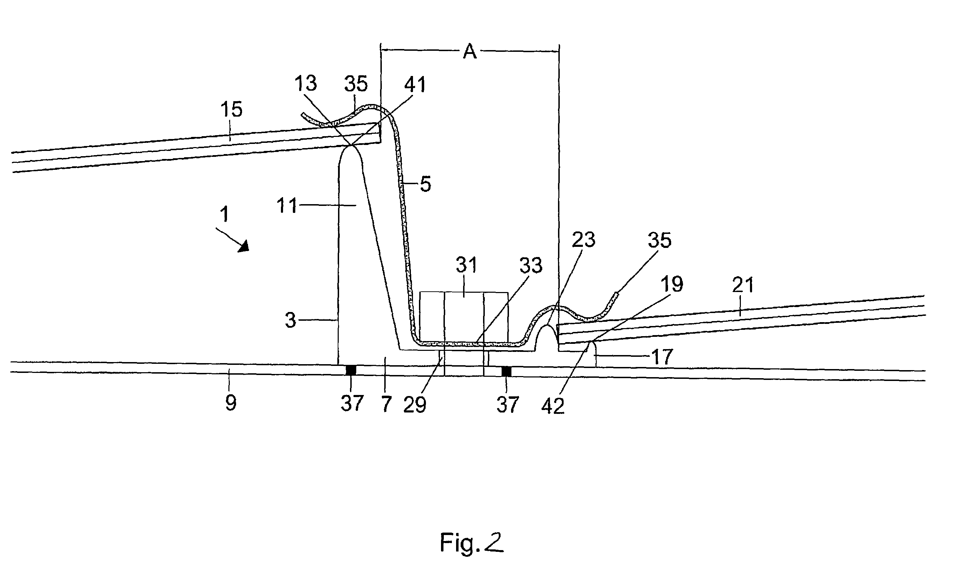

Es ist erfindungsgemäß vorgesehen, dass die obere Kante 27, wenn sie projiziert wird auf die Unterseite 7 des Basisteils 3 beabstandet ist von der unteren Kante 27. Dieses ist in der Figur 2 durch den Abstand A verdeutlicht, um den die beiden Kanten 25,27 auseinander liegen. Zwischen den beiden Auflageflächen 13, 19 besteht also beim Basisteil 3 ein Zwischenbereich A, in welchem eine Aussparung 29 vorgesehen ist, die von oberhalb der Klammer 1 frei zugänglich ist. Durch diese Aussparung, die als Stanzloch, Bohrung oder dergleichen realisiert sein kann, wird eine Schraube 31 geführt, mit der die Klammer 1 auf der Modulschiene 9 befestigt wird.

Der Bügel 5 weist dabei ebenfalls an zur Aussparung 29 fluchtender Stelle ein Loch 33 auf, so dass er zusammen mit dem Basisteil 3 montierbar ist. An seinen beiden Enden ist der Bügel 5 jeweils mit einem Federbogen 35 versehen, dessen Form so bemessen ist, dass die Federbögen 35 im montierten Zustand der Klammer 1 und der Photovoltaikmodule 15,21 diese gegen die Auflageflächen 13,19 anpresst. Dazu kann der Bügel 5 selber aus einem geeigneten Federstahl bestehen, oder es können andere an sich bekannte Mittel zur elastischen Bereitstellung einer Federkraft zur Anwendung kommen.

Zur verdrehsicheren Befestigung der Klammer 3 kann diese auf ihrer Unterseite 7 mit einem Nocken 37 versehen sein, der in ein korrespondierendes Loch (nicht gezeigt) in der Modulschiene 9 formschlüssig eingreift. Zur Stabilisierung des Aufbaus des Basisteils (3) kann dieser mit Querverstrebungen 39 versehen sein, was die verwendeten Wandstärken verringert oder zum Einsatz billigerer Materialien führen kann.

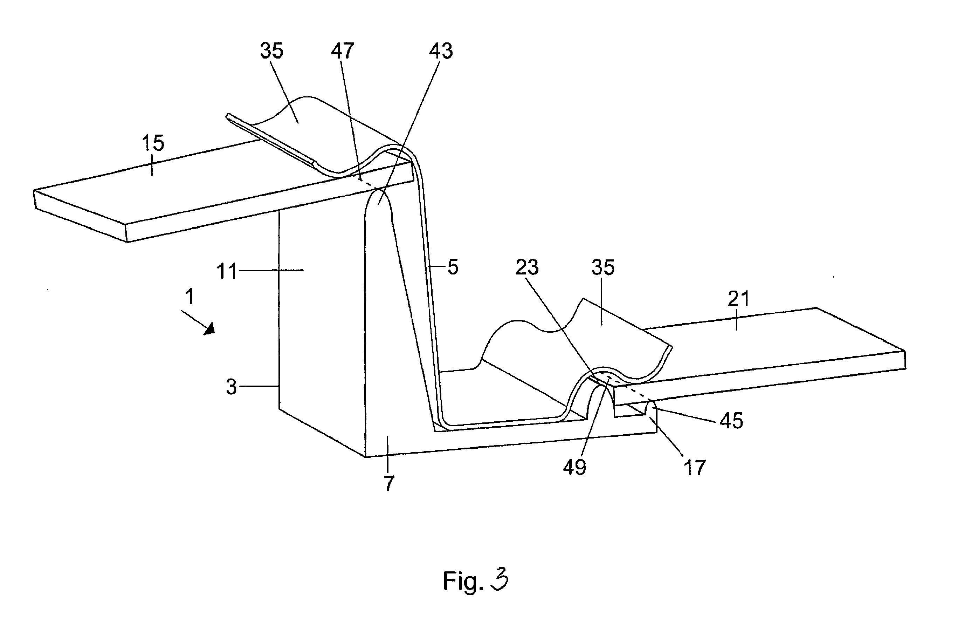

In den Figuren 2 und 3 sind gleiche Teile mit denselben Bezugszeichen versehen. Diese beiden Ausführungsformen sind insbesondere zum Einsatz von biegsamen Modulschienen geeignet. Wird zum Beispiel das zuvor genannte Flacheisen als Modulschiene verwendet, wird je nach Spannung und Einwirkung der Zugkraft an den Enden des Flacheisens eine mehr oder weniger starke Biegung auftreten, die sich bei Einwirkung von Wind- und Schneelast verändert. Die Photovoltaikmodule werden analog zu der Biegung des Flacheisens ihre Position auf den Klammern leicht verändern, was bei einer Auflagefläche zu einem Scheuern des Modulrandes auf der Auflagefläche führen würde. Um dieses zu vermeiden, ist gemäß der Figur 2 die Auflagefläche 13 so gestaltet, dass sie an der Berührungsstelle mit dem Photovoltaikmodul einen Auflagepunkt 41 bildet. Das Photovoltaikmodul 15, 21 ist um den Auflagepunkt 41, 42 herum frei schwenkbar gelagert, wodurch bei einer Biegung der Modulschiene 9 kein nennenswerter Reibungseffekt auftritt.

Die Variante nach der Figur 3 bietet einen optimalen Kompromiss, zwischen den Ausführungen nach den Figuren 1 und 2. Es sind Auflageflächen 13,19 vorgesehen, bei denen der eigentliche Kontakt zum Photovoltaikmodul 15, 21 weder flächig noch punktförmig, sondern linienförmig erfolgt. Dazu weist das Basisteil 3 eine Auflägefläche 13, 19 auf, die eine zylindrische Erhebung 43, 45 beinhaltet. Wird ein Photovoltaikmodul 15, 21 auf die zylindrische Erhebung 43, 45 gelegt und mittels des Bügels 5 angedrückt, so liegt eine Auflagelinie 47, 49 vor, die weder die hohe Punktbelastung gemäß der Ausführung nach der Figur 2 hat, noch den flächigen Scheuereffekt der Ausführung nach der Figur 3.

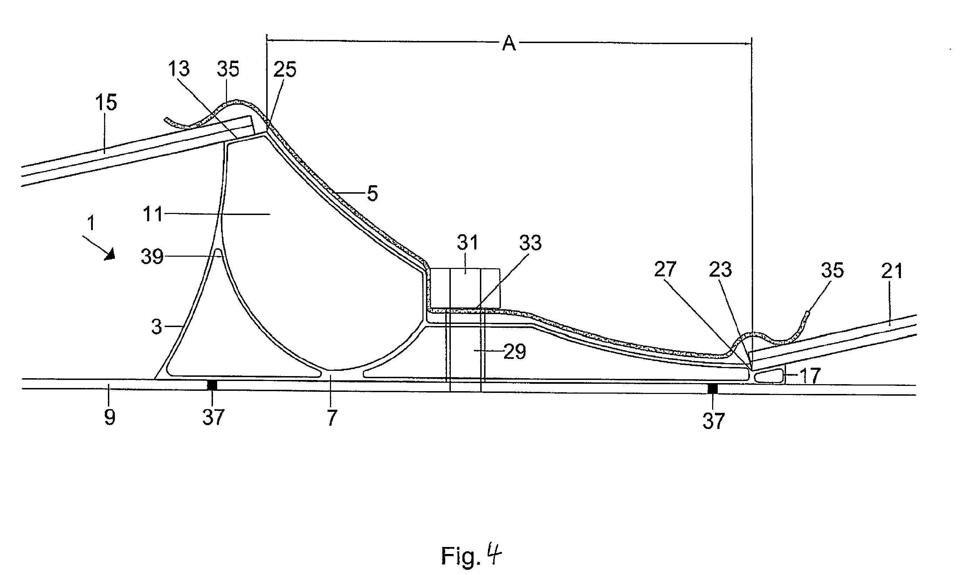

Die erste und zweite Auflagefläche 13,19 (Auflagepunkt, Auflagelinie) können bei beliebiger Formgebung des Basisteils 3 herausgebildet werden, wie es anhand der Figur 4 gezeigt ist, bei der gleiche Teile mit denselben Bezugszeichen versehen sind.

### Bezugszeichenliste

- 1: Klammer
- 3: Basisteil
- 5: Bügel
- 7: Unterseite
- 9: Modulträger
- 11: Erhebung
- 13: 1. Auflagefläche
- 15: 1. PV-Modul
- 17: Fortsatz
- 19: 2. Auflagefläche
- 21: 2. PV-Modul
- 23: Anschlag
- 25: obere Kante 1. Auflagefläche
- 27: untere Kante 2. Auflagefläche
- 29: Aussparung
- 31: Schraube
- 33: Loch
- 35: Federbogen
- 37: Nocken
- 39: Querverstrebung
- 41: 1. Auflagepunkt
- 42: 2. Auflagepunkt
- 43: 1. zylindrische Erhebung
- 45: 2. zylindrische Erhebung
- 47: 1. Auflagelinie
- 49: 2. Auflagelinie

- α: Neigungswinkel
- A: Abstand

## Patentansprüche

1. Klammer (1) zur geneigten Befestigung von rechteckigen Photovoltaikmodulen (15,21) auf einer Modulschiene (9), wobei die Oberkante eines ersten Moduls (15) auf einem höheren Niveau montierbar ist als die Unterkante eines zweiten Moduls (21), **dadurch gekennzeichnet, dass** die Oberkante und die Unterkante jeweils auf eine erste beziehungsweise zweite Auflage (13,19) eines Basisteils (3), welches eine Unterseite (7) hat, auflegbar und dort mittels eines Bügels (5) fixierbar ist, wobei die erste und die zweite Auflage jeweils durch eine Auflagefläche (13, 19), eine Auflagelinie (47, 49) oder einen Auflagepunkt (41, 42) gebildet werden und wobei die erste und die zweite Ablagefläche (13,19), die erste und die zweite Auflagelinie (47, 49) oder der erste und der zweite Auflagepunkt (41, 42), projiziert auf die Unterseite (7), voneinander beabstandet sind, so dass der höher liegende Rand (25) der ersten Auflagefläche (13), die Auflagelinie (47, 49) oder der Auflagepunkt (41, 42) einen vorgegebenen Abstand (A) zum unten liegenden Rand (27) der zweiten Auflagefläche (19) aufweist, wodurch eine klammerbedingte Schrägstellung des Photovoltaikmoduls bereitgestellt wird.

2. Klammer (1) nach Anspruch 1, **dadurch gekennzeichnet, dass** die Auflagen Auflageflächen gleicher Neigung sind, von denen die zweite Auflagefläche (19) für die untere Modulkante des zweiten Photovoltaikmoduls (21) mit einem als Anschlag (23) dienenden Absatz versehen ist.

3. Klammer (1) nach Anspruch 2, **dadurch gekennzeichnet, dass** die Höhe des Absatzes geringer ist als die Höhe des zu montierenden Photovoltaikmoduls.

4. Klammer (1) nach Anspruch 3, **dadurch gekennzeichnet, dass** die Höhe zwischen 3 und 8 mm liegt.

5. Klammer (1) nach einem der Ansprüche 1 bis 4, **dadurch gekennzeichnet, dass** die erste und die zweite Auflagefläche (13,19) jeweils parallel zur PV-Modulkante verlaufende Ränder aufweisen oder dass die erste und die zweite Auflagelinie (47,49) jeweils parallel zu Kanten des zu montierenden Photovoltaikmoduls (15,21) verlaufen.

6. Klammer (1) nach einem der Ansprüche 1 bis 5, **dadurch gekennzeichnet, dass** das Basisteil (3) im Bereich des vorgegebenen Abstandes (A) mit einer Aussparung (29) zur Durchführung einer Schraube (31) oder Niete versehen ist, mittels der die Klammer (1) auf die Modulschiene (9) befestigt wird.

7. Klammer (1) nach einem der Ansprüche 1 bis 6, **dadurch gekennzeichnet, dass** der Bügel (5) zwei eine Federkraft ausübende Enden (35) aufweist, von denen eines auf die erste Auflagefläche (13), Auflagelinie (47) oder Auflagepunkt (41) hin und das zweite auf die zweite Auflagefläche (19), Auflagelinie (49) oder Auflagepunkt (42) hin wirkt.

8. Klammer nach einem der Ansprüche 1 bis 7, **dadurch gekennzeichnet, dass** das Basisteil (3) stabilisierende Querverstrebungen (39) aufweist.

9. Klammer nach einem der Ansprüche 1 bis 8, **dadurch gekennzeichnet, dass** an der ansonsten ebenen Unterseite (7) des Basisteils (3) eine Erhebung (37) hervorsteht.

10. Klammer nach einem der Ansprüche 1 bis 9, **dadurch gekennzeichnet, dass** sie auf ein Flachband, insbesondere ein Flacheisen oder ein Kunsstoffband als Modulschiene (9) montiert ist und mindestens dieselbe Breite aufweist wie das Flacheisen.

11. Klammer nach einem der Ansprüche 1 bis 10, **dadurch gekennzeichnet, dass** mindestens eine Kabelhaltevorrichtung integriert ist.

12. Klammer nach Anspruch 1, **dadurch gekennzeichnet, dass** ihre Unterseite (7) zur Befestigung auf einem Seil ausgebildet ist.

13. Verfahren zur Herstellung des Basisteils (3) einer Klammer (1) nach einem der Ansprüche 1 bis 12 **dadurch gekennzeichnet, dass** eine Stranggussstange mit einem dem Querschnitt der Klammer (1) entsprechenden Profil hergestellt wird, welches anschließend in Scheiben geschnitten wird.
